# EUROPEAN PATENT APPLICATION

(11) **EP 1 293 703 A2**
(43) Date of publication of application: **19.03.2003**
(21) Application number: 02256307.6
(22) Date of filing: 11.09.2002
(51) Int. Cl.: F16F 9/52

(54) **Shock absorber**

(30) Priority: 18.09.2001 US 954746
(71) Applicant: ArvinMeritor Technology, LLC, Troy, MI 48084 (US)
(72) Inventor: Sendrea, Darryl, Brampton, Ontario L6T 3B6 (CA)
(74) Representative: Jones, John Bryn

(57) **Abstract**

A shock absorber assembly (10) includes a damping mechanism that adjusts to compensate for operation at elevated temperatures. A member (24, 26) made of two dissimilar materials permanently bonded together with one material having a higher expansion coefficient than the other material provides a biased response toward the material with the lower expansion coefficient. This biased response compensates for incremental pressure changes in the shock absorber due to operation at elevated temperatures to provide constant damping regardless of temperature.

## Description

### BACKGROUND OF THE INVENTION

This invention relates to a shock absorber having a temperature compensating valve assembly for counteracting damping fade.

Vehicles utilize shock absorbers to dampen vibrations and shocks experienced by a vehicle. As shock absorbers dampen vibrations over an extended period of time, the shock absorbers generate a significant amount of heat. Shock absorbers that operate at these elevated temperatures experience damping fade, i.e., the damping force exhibited at higher temperature may be more or less than the damping force at lower temperatures. Damping fade results in uncontrolled motion changes within the shock absorber, which can adversely affect vehicle control and handling.

Current adjustment systems are complex and expensive, and thus are not readily available for use on all vehicle types. Further, these systems often do not adequately adjust for damping fade at elevated temperatures.

It is desirable to provide a shock absorber with a simplified temperature compensation mechanism that is easily incorporated into the shock absorber in addition to overcoming the above referenced deficiencies with prior art systems

### SUMMARY OF THE INVENTION

The subject invention provides a shock absorber assembly includes a mechanism that adjusts to compensate for operation at elevated temperatures. The mechanism is made from two dissimilar materials bonded together. One material has a higher expansion coefficient than the other material to provide a biased deflection response of the mechanism toward the material with the lower expansion coefficient. This biased response compensates for incremental pressure changes in the shock absorber due to operation at elevated temperatures to provide constant damping regardless of temperature.

In the preferred embodiment, the shock absorber assembly includes a cylinder having an interior chamber with a piston mounted within the cylinder to separate the chamber into a recoil side and a compression side. The piston co-acts with fluid within the chamber to dampen vibrations. A first disc valve is mounted to the piston on a compression side and a second disc valve is mounted to the piston on a recoil side. Some or all of the disc valves on either side of the piston are formed from the material having two dissimilar material layers bonded together. The disc valves exhibit a biased deflection once a predetermined temperature is exceeded to compensate for damping fade.

Preferably, the first and second disc bi-metal valves have a first operation mode below the predetermined temperature and a second operation mode above the predetermined temperature. In the first operation mode, the disc valves deflect in a normal manner in response to a pressure differential generated by the piston moving through the fluid. In the second operation mode and in addition to responding to a pressure differential, the disc valves deflect in a biased manner toward the material having the lower expansion coefficient to compensate damping for incremental pressure changes due to operating at elevated temperatures. The biased deflection is used to deflect away from the piston on the compression side and toward the piston on the recoil side.

In an alternate embodiment, the shock absorber includes a shock absorber member having at least one port to define a fluid path. A valve is mounted for interaction with respect to the port to control fluid flow through the path. An actuator is formed from the material having two dissimilar material layers bonded together such that the actuator exhibits biased deflection toward layer having the lower expansion coefficient when a predetermined temperature is exceeded to control movement of the valve to compensate for damping fade. A by-pass spring is mounted between the valve and the actuator to control movement of the valve in response to changing temperatures. The increase in spring preload against the valve provides greater restriction of flow through the port in response to biased actuation and reacts against the valve to provide less restriction of flow through the port in response to non-biased actuation at temperatures below the predetermined temperature.

These and other features of the present invention can be best understood from the following specification and drawings, the following of which is a brief description.

### BRIEF DESCRIPTION OF THE DRAWINGS

Figure 1 is a schematic representation of a shock absorber incorporating the subject invention.
Figure 2 is a cross-sectional cut-away view of a prior art shock absorber.
Figure 3A is a cross-sectional cut-away view of a shock absorber incorporating the subject invention operating at ambient temperatures.
Figure 3B is a cross-sectional cut-away view of the shock absorber of Figure 3A operating at elevated temperatures.
Figure 4 is a cross-section view of a biasing member incorporating the subject invention.
Figure 5A is a cross-sectional cut-away view of an alternate embodiment incorporating the subject invention operating at ambient temperatures.
Figure 5B is a cross-sectional cut-away view of the shock absorber of Figure 4A operating at elevated temperatures.

### DETAILED DESCRIPTION OF AN EXEMPLARY EMBODIMENT

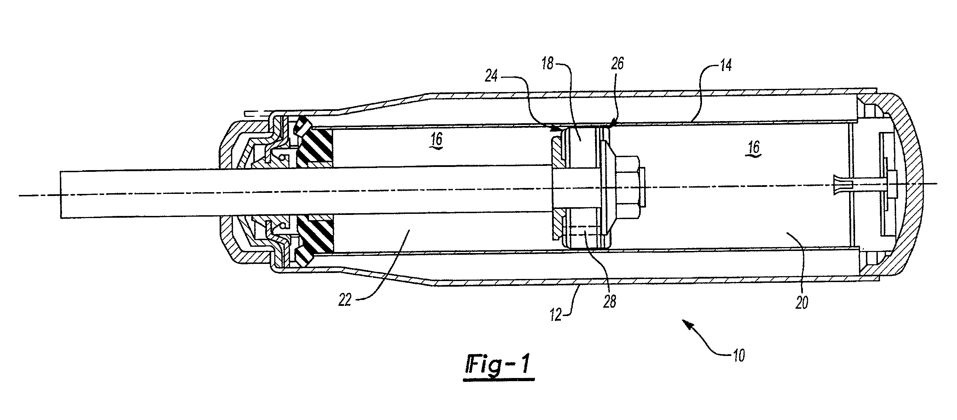

Referring to Figure 1, a twin cylinder shock absorber assembly is shown generally at 10. The shock absorber 10 includes an outer cylinder 12 and an inner cylinder 14 mounted within the outer cylinder 12 to define a chamber 16 for holding a fluid. A plunger or piston member 18 is mounted within the chamber 16 on a centrally located shaft for movement back and forth within the chamber 16. Fluid is sealed within the chamber 16, as is known in the art, and is compressed by the piston 18 to dampen vibrations. Any type of known fluid can be used, including hydraulic fluid or gas, for example. Also, while a twin cylinder shock absorber is shown, it should be understood that the subject invention could be utilized in other shock absorber configurations.

The piston 18 separates the chamber 16 into a compression side 20 and a recoil side 22. A first disc valve assembly 24 is mounted to the piston 18 on the compression side 20 and a second disc valve assembly 26 is mounted to the piston 18 on the recoil side 22. The first disc valve assembly 24 preferably surrounds a portion of the piston shaft. The disc valve assemblies 24, 26 are comprised of a plurality of disc members. A flow path 28 defined through the discs 24, 26 and piston 18 channels fluid between the compression 20 and recoil 22 sides in response to piston movement. Operation of disc valves in shock absorbers is well known and will not be discussed in further detail.

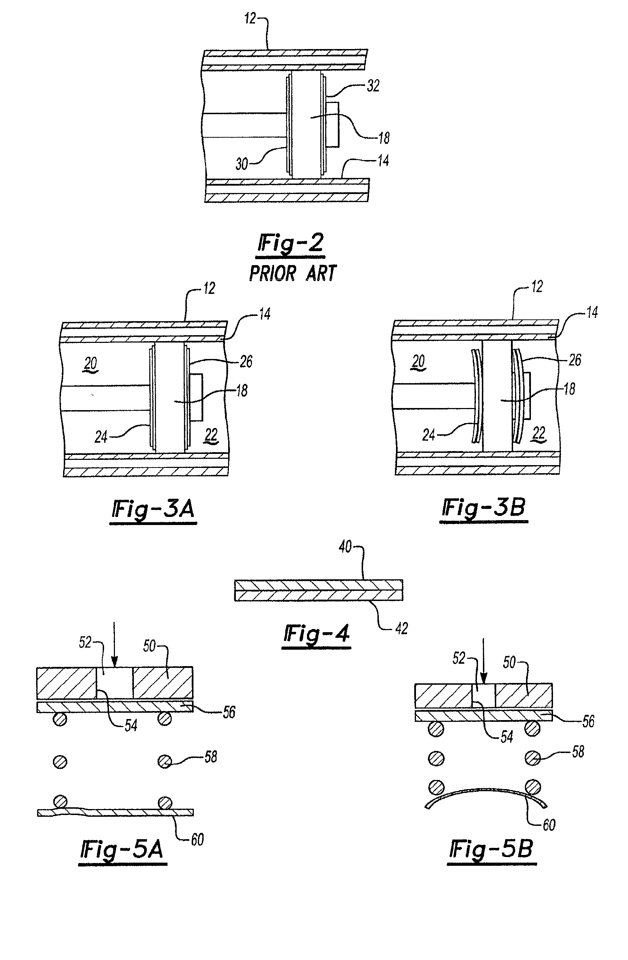

A traditional disc valve configuration is shown in Figure 2. A first disc valve assembly 30 is mounted to the piston 18 on the compression side 20 and a second disc valve assembly 32 is mounted to the piston 18 on the recoil side 22. Current disc valves are made from spring steel or high-grade steel discs. These disc valves 30, 32 deflect with piston movement as a result of a pressure differential generated by the piston 18 moving through the fluid. At elevated temperatures, the disc valves 30, 32 perform in a similar manner. Any incremental internal pressure change within the shock absorber due to elevated temperatures would not be compensated for and thus, results in damping degradation or damping fade.

The subject invention replaces the traditional disc valve with a disc valve made from at least two (2) dissimilar materials. A preferred embodiment of the invention is shown in Figures 3A and 3B. As discussed above, the first disc valve assembly 24 is mounted to the piston 18 on the compression side 20 and the second disc valve assembly 26 is mounted to the piston18 on the recoil side 22. The disc valves 24, 26 deflect with piston movement as a result of a pressure differential generated by the piston 18 moving through the fluid in a normal mode of operation within a predefined temperature range, shown in Figure 3A.

Once a predetermined temperature is exceeded, a second mode of operation is exhibited in which the disc valves 24, 26 are biased toward a predetermined side to compensate for incremental pressure changes due to operation at elevated temperatures, as shown in Figure 3B. Thus, subject invention provides constant damping regardless of operating temperature. In the preferred embodiment, the disc valve 24 deflects away from the piston 18 on the compression side 20 and the disc valve 26 deflects toward the piston 18 on the recoil side 22. An opposite configuration could also be used.

When operating under the normal temperature ranges the disc valves 24, 26 have a generally straight profile (Fig. 3A). When operating under elevated temperatures the disc valves 24, 26 have a generally curved profile (Fig. 3B). While the preferred configuration is the same deflection direction for both disc valves 24, 26, an opposing configuration could also be utilized.

A cross-sectional view of the material of which the disc valves 24, 26 are formed is shown in Figure 4. Preferably, the material is a bi-metal material comprised of two (2) dissimilar metals permanently bonded together. A first layer of material 40 having a first expansion coefficient is bonded to a second layer of material 42 having a second expansion coefficient that is greater than the first expansion coefficient. The difference between expansion coefficients results in a biased deflection, which is always toward the layer of material having the lower expansion coefficient. The bias is controlled by pre-selecting metal materials having desired expansion coefficients. The metal materials and associated expansion coefficients will vary depending upon the application.
The bi-metal feature can be used in a variety of applications, including one wherein additional valve blow-off spring preload could be achieved as the bi-metal component deflects toward or away from the valve component. The bi-metal component can be combined with a spring to either preload the spring or back the spring away to allow change of pressure in response to increases in temperature.

This alternate embodiment is shown in Figures 5A and 5B. A portion of the shock absorber 50 includes at least one port 52 to define a fluid path 54. A valve 56 is mounted for interaction with the port 52 to control fluid flow through the path 54. A spring 58 is mounted to the valve 56 to control the position of the valve 56 in relation to the port 52. An actuator member 60 made from the bi-metal material controls the spring bias to compensate for damping fade. When the predetermined temperature is reached, the actuator 60 is moved from a non-biased position, shown in Figure 5A, to a biased position shown in Figure 5B. In the biased position, the spring 58 reacts against the valve 56 to provide greater restriction of flow through the port 52 to compensate for incremental pressure changes to operation at elevated temperatures. In the non-biased position, the spring 58 reacts against the valve 56 to provide less restriction of flow through the port 52 to operate at temperatures below the predetermined temperature.

The subject invention provides a shock absorber assembly with a simplified temperature compensation mechanism that is easily incorporated into the shock absorber. The subject shock absorber also provides an inexpensive method and apparatus for compensating for damping fade, which allows the improvement to be utilized on many different vehicle types.

The aforementioned description is exemplary rather than limiting. Many modifications and variations of the present invention are possible in light of the above teachings. The preferred embodiments of this invention have been disclosed. However, one of ordinary skill in the art would recognize that certain modifications would come within the scope of this invention. Hence, within the scope of the appended claims, the invention may be practiced otherwise than as specifically described. For this reason the following claims should be studied to determine the true scope and content of this invention.

## Claims

1. A shock absorber assembly (10) comprising:
a cylinder (14) having an interior chamber (16) for receiving a fluid;
a piston (18) mounted within said cylinder to separate said chamber into a recoil side (22) and a compression side (20), said piston co-acting with the fluid by moving linearly back and forth within said chamber to dampen vibrations;
a first disc valve (24) mounted to said piston on said compression side;
a second disc valve (26) mounted to said piston on said recoil side, said first and second disc valves each being formed from at least two different materials such that said disc valves exhibit a biased deflection once a predetermined temperature is exceeded to maintain damping at a desired level.

2. The assembly according to claim 1 wherein said first and second disc valves exhibit a first behavior at temperatures below said predetermined temperature and a second behavior at temperatures above said predetermined temperature; wherein said first behavior includes said first and second disc valves deflecting as a result of a pressure differential generated by said piston moving through said fluid and wherein said second behavior includes said first and second disc valves exhibiting said biased deflection by biasing toward a predetermined side of said chamber in response to incremental pressure changes at temperatures above said predetermined temperature.

3. The assembly according to claim 2 wherein said predetermined side is said compression side.

4. The assembly according to claim 2 wherein said predetermined side is said recoil side.

5. The assembly according to any preceding claim wherein said first and second disc valves are comprised of a plurality discs.

6. The assembly according to any preceding claim wherein each of said disc valves has a first side and a second side with said first side being formed from a first material having a first expansion coefficient and said second side being formed from a second material having a second expansion coefficient higher than said first expansion coefficient such that said disc valves are biased toward said first side once said predetermined temperature is exceeded.

7. The assembly according to any preceding claim including a shaft attached to a center of said piston for moving said piston back and forth within said chamber wherein said second disc valve surrounds a portion of said shaft.

8. The assembly according to any preceding claim wherein each of said disc valves is formed from a bi-metal material including a first layer of material (40) permanently bonded to a second layer of material (42) wherein said first layer of material has a first expansion coefficient and said second layer of material has a second expansion coefficient that is greater than said first expansion coefficient.

9. A shock absorber (10) assembly comprising:
a cylinder (14) having an interior chamber (16) for receiving a fluid;
a piston (18) mounted within said cylinder to separate said chamber into a recoil side (22) and a compression side (20), said piston co-acting with the fluid by moving linearly back and forth within said chamber to dampen vibrations;
a first disc valve (24) mounted to said piston on said compression side;
a second disc valve (26) mounted to said piston on said recoil side, said first and second disc valves each being formed from a material including a first layer of material (40) permanently bonded to a second layer of material (42) wherein said first layer of material has a first expansion coefficient and said second layer of material has a second expansion coefficient that is greater than said first expansion coefficient such that said disc valves exhibit a biased deflection once a predetermined temperature is exceeded to compensate for damping fade.

10. The assembly according to claim 8 or 9 wherein said first and second disc valves have a first operation mode below said predetermined temperature and a second operation mode above said predetermined temperature, said first operation mode including normal deflection of said discs in response to a pressure differential generated by said piston moving through said fluid and said second operation mode including a biased deflection of said discs toward said first layer of material to compensate damping for incremental pressure changes due to operating at elevated temperatures.

11. The assembly according to claim 9 or 10 wherein said first and second disc valves are biased in the same direction.

12. A method for compensating for damping fade in a vehicle shock absorber assembly (10) comprising the steps of:
(a) mounting a piston (18) within a cylinder (14) to co-act with a fluid sealed within the cylinder to dampen vibrations;
(b) forming a disc valve assembly (24, 26) from a material including a first layer (40) of material permanently bonded to a second layer (42) of material wherein the first layer of material has a first expansion coefficient and the second layer of material has a second expansion coefficient that is greater than the first expansion coefficient;
(c) mounting one disc valve assembly (24) on a recoil side of the cylinder;
(d) mounting another disc valve assembly (26) on a compression side of the cylinder; and
(e) loading the disc valve assemblies in a direction biased toward the first layer of material when a predetermined temperature is exceeded to compensate for damping fade.

13. The method according to claim 12 wherein step (e) is further defined as deflecting the disc valve assemblies in a normal manner in response to a pressure differential generated by the piston moving through the fluid to define a first mode of operation at temperatures below the predetermined temperature and biasing the disc valve assemblies toward the first layer of material to compensate damping for incremental pressure changes due to operating at elevated temperatures above the predetermined temperature to define a second mode of operation.

14. The method according to claim 13 wherein the first mode of operation provides disc valve assemblies having a generally straight profile and the second mode of operation provides disc valve assemblies having a generally curved profile.

15. A shock absorber assembly comprising:
a shock absorber member including at least one port (52) to define a fluid path (54);
a valve (56) mounted for interaction with respect to said port to control fluid flow through said path; and
an actuator (60) formed from a material including a first layer of material permanently bonded to a second layer of material wherein said first layer of material has a first expansion coefficient and said second layer of material has a second expansion coefficient that is greater than said first expansion coefficient such that said actuator exhibits biased deflection toward said first layer of material when a predetermined temperature is exceeded to control movement of said valve to compensate for damping fade.

16. An assembly according to claim 15 including a cylinder having an interior chamber for receiving a fluid and wherein said shock absorber member is a piston mounted within said cylinder to co-acting with fluid by moving linearly back and forth within said chamber to dampen vibrations and wherein said valve and actuator together form an assembly including a first disc valve mounted to said piston a compression side and a second disc valve mounted to said piston on a recoil side, said first and second disc valves each being formed from said material such that said disc valves exhibit a biased deflection once a predetermined temperature is exceeded to compensate damping for incremental pressure changes due to operating at elevated temperatures.

17. An assembly according to claim 15 or 16 including a spring (58) mounted between said valve and said actuator wherein said spring reacts against said valve to provide greater restriction of flow through said port in response to biased actuation and wherein said spring reacts against said valve to provide less restriction of flow through said port in response to non-biased actuation at temperatures below said predetermined temperature.
